# EUROPÄISCHE PATENTSCHRIFT

(11) **EP 0 966 381 B1**
(45) Veröffentlichungstag und Bekanntmachung des Hinweises auf die Patenterteilung: **20.08.2003**
(21) Anmeldenummer: 98916912.3
(22) Anmeldetag: 10.03.1998
(51) Int. Cl.: B60T 13/74, B60T 11/04

(54) **HILFSBETÄTIGUNGSEINRICHTUNG FÜR EINE ELEKTROMECHANISCH BETÄTIGTE FESTELLBREMSANLAGE**
AUXILIARY ACTUATING DEVICE FOR AN ELECTROMECHANICALLY ACTUATED PARKING BRAKE SYSTEM
DISPOSITIF D'ACTIONNEMENT AUXILIAIRE POUR UN SYSTEME DE FREIN DE STATIONNEMENT A ACTIONNEMENT ELECTROMECANIQUE

(30) Priorität: 14.03.1997 DE 19710602
(43) Veröffentlichungstag der Anmeldung: 29.12.1999
(73) Patentinhaber: Continental Teves AG & Co. oHG, 60488 Frankfurt (DE)
(72) Erfinder: BALZ, Jürgen, D-65510 Hünstetten-Oberlibbach (DE); DENHARD, Werner, D-63607 Wächtersbach (DE); WEILER, Rolf, D-65817 Eppstein (DE)
(86) Internationale Anmeldenummer: EP9801378
(87) Internationale Veröffentlichungsnummer: WO98041431

(56) Entgegenhaltungen:
- DE-A- 4 129 919
- DE-A- 4 129 934
- DE-A- 4 205 588
- DE-A- 19 508 511

## Beschreibung

Die Erfindung betrifft eine muskelkraftbedienbare Hilfsbetätigungseinrichtung für eine im Regelfall elektromechanisch betätigte Feststellbremsanlage gemäß dem Oberbegriff des Patentanspruchs 1. Jede Feststellbremse am Kraftfahrzeugrad ist jeweils mit einem unmittelbar an der Feststellbremse angeordneten elektromotorischen Aktuator ausgestattet ist.

Gattungsgemäße elektromechanisch betätigte Feststellbremsanlagen sind beispielsweise in DE-A-4 129 919, DE-A- 19 508 511 , DE-A-4 129 934 oder DE-A- 4 205 588 offenbart. Darin werden sowohl Feststellbremsanlagen beschrieben, bei denen beide Radbremsen über Bowdenzüge mittels eines einzigen Elektromotors betätigt werden, als auch solche Feststellbremsanlagen, die für jede einzelne Radbremse über jeweils einen unmittelbar an der Radbremse angeordneten Elektromotor zur Fremdkraftbetätigung verfügen. Laut derzeitiger gesetzlicher Bestimmungen ist für solche im Regelfall elektromechanisch betätigte Feststellbremsanlagen eine Hilfsbetätigungseinrichtung erforderlich, die eine Feststellbremsbetätigung (sowohl Zustellen als auch Lösen) selbst im Falle des Ausfalles der elektrischen Anlage noch ermöglicht. Die konstruktive Ausführung einer derartigen Hilfsbetätigungseinrichtung, insbesondere bei Bremsanlagen mit Aktuatoren unmittelbar an der Radbremse, sind in dem obigen Dokument jedoch nicht erwähnt.

Eine solche oben beschriebene Hilfsbetätigungseinrichtung für eine elektromechanische Feststellbremsanlage wird in der DE 41 29 934 C2 gezeigt. Die muskelkraftbetriebene Hilfsbetätigung ist hier als Notbetätigung einer fremdkraftbetätigten Feststellbremsanlage ausgelegt, wobei die Feststellbremsanlage über einen einzigen Elektromotor verfügt, der in der Regel über Bowdenzüge auf die auf beiden Kraftfahrzeugseiten angeordneten Radbremsen zugreift. Die Hilfsbetätigungseinrichtung besteht aus einer Handkurbel mit unmittelbar angrenzendem Schneckenradgetriebe, das über einen Seilzug direkt mit dem Getriebe des Elektromotors verbunden ist. Ausgehend von diesem Elektromotorgetriebe können die Stellbewegungen in die Radbremsen eingeleitet werden. Bei Notbetätigung kann somit durch Drehung der Handkurbel und Umsetzung der Betätigungskraft innerhalb des Schneckenradgetriebes sowie des Elektromotorgetriebes ein mechanischer Zugriff auf die Radbremsen erfolgen. Als nachteilig bei einer solchen Anordnung erweist sich insbesondere die komplexe Gestaltung des Schneckenrad- bzw. des Elektromotorgetriebes sowie das sehr aufwendige und demzufolge bei den Automobilherstellern unerwünschte Verlegen der erforderlichen Seilzüge (in der Regel Bowdenzüge) am Kraftfahrzeug.

Ausgehend von einer im Regelfall elektromechanisch betätigten Feststellbremsanlage besteht die Aufgabe der Erfindung darin, eine Hilfsbetätigungseinrichtung anzugeben, die hinsichtlich ihres konstruktiven Aufbaus vereinfacht und verbessert ausgeführt ist.

Erreicht wird dies durch die erfindungsgemäße Merkmalskombination des Patentanspruchs 1. Danach besitzt die muskelkraftbedienbare Hilfsbetätigungseinrichtung für eine im Regelfall elektromechanisch betätigte Feststellbremsanlage ausschließlich bei Hilfsbetätigung einen mechanischen Zugriff auf den elektromotorischen Aktuator bzw. die Feststellbremse selbst, wobei jede Feststellbremse am Rad einen unmittelbar daran angeordneten elektromotorischen Aktuator besitzt, welcher direkt über ein Stellglied mit der Feststellbremse verbunden ist. Vorteilhafterweise ist die elektromechanisch betätigte Feststellbremse als Trommelbremse, vorzugsweise als Duo-Servo-Topfhandbremse ausgeführt. In einer Variante erfolgt der mechanische Zugriff der Hilfsbetätigungseinrichtung rotatorisch auf einen Rotor innerhalb des elektromotorischen Aktuators. Dabei besitzt der Rotor eine Gewindeverbindung zu einer verdrehfesten Spindel, wodurch die Drehbewegung des Rotors in eine translatorische Bewegung der Spindel umgewandelt wird. Die Spindel wirkt direkt auf das Stellglied der Feststellbremse, insbesondere das heute weit verbreitete Spreizschloß, ein, wodurch selbst bei Ausfall der elektrischen Anlage eine Hilfsbetätigung der Feststellbremse ermöglicht wird.

In einer besonders einfachen Ausführung besitzt der unmittelbar an der Radbremse angeordnete elektromotorische Aktuator an seinem Rotor unmittelbar eine Aufnahme (z. B. Innensechskant) für ein Bordwerkzeug zur mechanischen Hilfsbetätigung des Rotors bzw. der Feststellbremse. Die Hilfsbetätigung erfolgt dabei unmittelbar am Aktuator durch Drehung des mit dem Stellglied der Feststellbremse in Verbindung stehenden Rotors.

Weitere, bevorzugte Varianten der Erfindung nach Anspruch 5 sehen vor, daß die Hilfsbetätigungseinrichtung eine durch Muskelkraft betätigbare Bedieneinheit sowie zumindest ein zur Übertragung der Betätigungskräfte zwischen Bedieneinheit und elektromotorischem Aktuator verlaufendes Übertragungselement besitzt. Dadurch wird es möglich, die Hilfsbetätigung nicht ausschließlich am Kraftfahrzeugrad durchzuführen, sondern vielmehr durch eine frei wählbare Positionierung der Bedieneinheit eine komfortable Aktivierung der Hilfsbetätigung beispielsweise auch vom Fahrersitz aus zu gewährleisten.

In einer vorteilhaften Weiterbildung der Hilfsbetätigungseinrichtung nach den Ansprüchen 6 bis 12 erfolgt die Hilfsbetätigung auf pneumatischem Wege. Die Bedieneinheit ist ähnlich einer Luftpumpe als pneumatische Pumpeneinheit ausgeführt, an die sich das Übertragungselement anschließt, das zumindest einen Druckschlauch enthält. Das Übertragungselement mit Druckschlauch mündet aktuatorseitig in einen pneumatisch-mechanischen Wandler, der die pneumatische Betätigungskraft in eine auf den Aktuator bzw. die Feststellbremse wirkende Stellkraft umwandelt. Im einzelnen besitzt der pneumatisch-mechanische Wandler, der vorteilhafterweise in den Aktuator integriert ist, einen pneumatisch betriebenen Kolben, dessen translatorische Bewegung in eine auf den Aktuatorrotor zu übertragende rotatorische Bewegung umgesetzt wird. Dadurch ergibt sich bei Betätigung der pneumatischen Pumpeneinheit im Aktuator eine diskontinuierliche Stellbewegung des Rotors. Idealerweise enthält die Hilfsbetätigungseinrichtung mindestens zwei Druckschläuche und zwei Kolben innerhalb des pneumatisch-mechanischen Wandlers, wobei ein Kolben eine Zustellbetätigung und der andere Kolben eine gegenläufige Lösebetätigung am Aktuator bewirkt. Die unterschiedliche Art der Hilfsbetätigung (Lösen bzw. Zustellen) läßt sich unmittelbar beispielsweise durch Schalterstellung an der pneumatischen Pumpeneinheit einstellen.

Ein zusätzlicher Vorteil ergibt sich, wenn das Übertragungselement als flexibles, kombiniertes Versorgungskabel ausgebildet ist. Hierbei enthält es sowohl die elektrische Versorgungsleitung für die elektromechanisch betätigte Feststellbremse als auch zumindest einen Druckschlauch für die pneumatische Hilfsbetätigungseinrichtung. Ein derartiges kombiniertes Versorgungskabel vereinfacht in erheblichem Maße die Verlegung unmittelbar am Fahrzeug und erspart die zusätzliche Montage von Leitungen für die Feststellbremse (z. B. Seilzüge).

In einer anderen Ausführungsvariante besitzt die Hilfsbetätigungseinrichtung einen flexiblen Zugstrang (z.B. Seilzug) als Übertragungselement, der durch den elektromotorischen Aktuator hindurchgeführt ist und unmittelbar am Stellglied der Feststellbremse befestigt ist. Dadurch kann eine direkte Hilfsbetätigung per Zug erfolgen. Die Bedieneinheit kann hier wahlweise als Drehkurbel oder aber auch als Hebel ausgeführt sein. Derartige Hilfsbetätigungseinrichtungen ermöglichen allerdings nur eine Zustellung der Feststellbremse und erfordern damit eine zusätzliche Einrichtung zur Notlösung der Feststellbremse.

In einer weiteren Ausführungsform besitzt die Hilfsbetätigungseinrichtung als Bedieneinheit eine Handkurbel und eine flexible Welle als Übertragungselement. Die flexible Welle enthält eine axial verschiebbare Wellenseele, die erst durch Axialverschiebung während der Hilfsbetätigung mit ihrem aktuatorseitigen Ende in eine drehfeste Aufnahme im Aktuator einführbar ist. Bei Eingriff der Wellenseele vorzugsweise in den Rotor des Aktuators, wird die rotatorische Hilfsbetätigungskraft ausgehend von der Kurbel über die Wellenseele auf den Aktuator übertragen.

Ausführungsbeispiele der Erfindung werden anhand der Zeichnungen dargestellt und im folgenden näher erläutert.

Es zeigen:
- Fig. 1: einen Schnitt durch einen elektromotorischen Aktuator einer Feststellbremse mit Bordwerkzeug zur Hilfsbetätigung,
- Fig. 2: eine teilweise geschnittene Darstellung eines elektromotorischen Aktuators mit pneumatischer Hilfsbetätigungseinrichtung
- Fig. 3: eine geschnittene Darstellung eines elektromotorischen Aktuators einer Feststellbremse mit mechanischer Hilfsbetätigungseinrichtung mittels Zugkraftübertragung,
- Fig. 4: eine geschnittene Ansicht eines elektromotorischen Aktuators einer Feststellbremse mit mechanischer Hilfsbetätigungseinrichtung, wobei die Betätigungskraft bei Hilfsbetätigung rotatorisch übertragen wird
- Fig. 5: einen geschnittenen Ausschnitt einer Variante des Aktuators mit Übertragungselement der Hilfsbetätigungseinrichtung aus Fig. 4.

Allen Figuren ist ein elektromotorischer Aktuator 1 zu entnehmen, der Bestandteil einer elektromechanisch betätigten Feststellbremsanlage ist. Für die gezeigten Ausführungsbeispiele ist der Aktuator jeweils unmittelbar an der nicht gezeigten Feststellbremse eines Kraftfahrzeugrades angebracht. Die Feststellbremse ist insbesondere als Trommelbremse, vorzugsweise Duo-Servo-Bremse ausgeführt. Durch die Anordnung des Aktuators 1 direkt an der Feststellbremse ergibt sich eine kompakte Bauform der gesamten Einheit und zusätzlich wird die Leitungsverlegung gegenüber heutigen Feststellbremsen üblicherweise mit Seilzügen erheblich vereinfacht. Der Aktuator 1 besitzt für alle gezeigten Ausführungsbeispiele im wesentlichen den gleichen konstruktiven Aufbau. Er besteht aus einem fest mit der nicht gezeigten Feststellbremse verbundenen Stator 2 sowie einem drehbar dazu gelagerten Rotor 3. Der Stator 2 wird im wesentlichen durch eine elektrische Wicklung 5 mit Metallkern gebildet und ist innerhalb eines Gehäuses 4 angeordnet. Das hülsenförmige, an einem Ende nach innen umgestülpte Gehäuse 4, das an seinem umgestülpten Ende an der Feststellbremse befestigt ist, ist weiterhin an eine elektrische Versorgungsleitung 6 angeschlossen. Der über ein Wälzlager 7 gegenüber dem Stator 2 drehbar gelagerte Rotor 3 besteht im wesentlichen aus einer rohrförmigen, hohlen Rotorwelle 8, die ebenfalls umgestülpt ausgeführt ist. An ihrem Außenumfang besitzt die hohle Rotorwelle 8 vorzugsweise aufgeklebte Permanentmagnete 9. Rotorwelle 8 und Gehäuse 4 sind dabei auf besonders kostengünstige Weise aus rohrförmigen Rohteilen durch einfache Blechumformung herstellbar. An seinem der nicht gezeigten Feststellbremse zugewandten Ende besitzt das Gehäuse 4 (in allen Figuren auf der linken Seite) eine Öffnung 10, in die sich ein von der Feststellbremse kommender Seilzug 11 hineinerstreckt. Der Seilzug 11 steht an seinem bremsenseitigen Ende direkt mit einer Spreizeinrichtung für die Bremsbacken einer Trommelbremse, beispielsweise dem bekannten und auch im Stand der Technik beschriebenen Spreizschloß, in Verbindung. An seinem aktuatorseitigen Ende mündet der Seilzug 11 in eine in den Aktuator 1 integrierte Spindel 12. Die Spindel 12 ist über eine Verdrehsicherung 13 axial verschiebbar innerhalb des Aktuatorgehäuses 4 geführt. Eine solche Verdrehsicherung 13 läßt sich beispielsweise durch einen Polygonquerschnitt oder aber einen anderen verdrehsicheren Querschnitt der Spindel realisieren. An ihrem anderen Ende ist die Spindel 12 mit einem Außengewinde 14 drehbar innerhalb einer entsprechenden Gewindebohrung 15 der hohlen Rotorwelle 8 angeordnet.

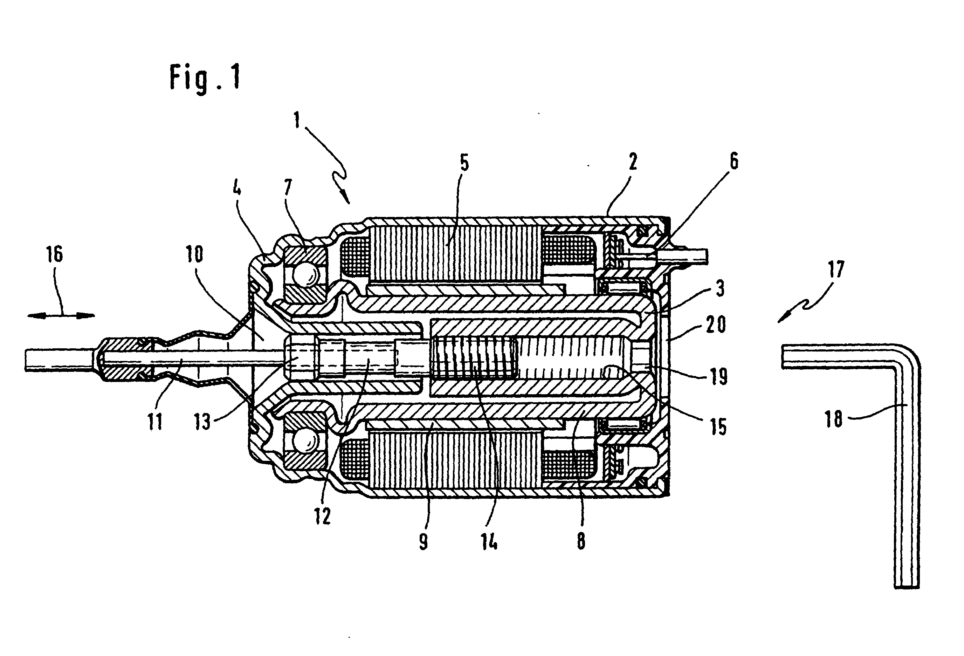

Eine im Regelfall elektromechanische Betätigung der Feststellbremse und damit Bestromung des elektromotorischen Aktuators 1 bewirkt eine Drehung der Rotorwelle 8 gegenüber dem Aktuatorgehäuse 4 und damit auch gegenüber der Spindel 12. Über das selbsthemmende Gewinde 14,15 zwischen Rotorwelle 8 und Spindel 12 wird die Drehbewegung der Rotorwelle 8 in eine translatorische Bewegung (in Fig. 1 horizontal) der Spindel 12 umgewandelt. Aus der translatorischen Bewegung der Spindel 12 und damit des Seilzuges 11 ergibt sich schließlich die erforderliche Stellbewegung 16 für die Feststellbremse. Dabei ist je nach Rotorwellendrehrichtung eine Stellbewegung 16 sowohl in Richtung Zustellen wie auch in Richtung Lösen der Feststellbremse ausführbar.

Für derartige elektromechanisch betätigte Feststellbremsanlagen ist nach derzeitiger Gesetzgebung eine zusätzliche Hilfsbetätigungseinrichtung vorgeschrieben, die beispielsweise bei Ausfall der elektrischen Gesamtanlage hilfsweise ein Zustellen bzw. Lösen der Feststellbremse ermöglichen soll.

In der Ausführung nach Fig. 1 besteht die besonders einfache Hilfsbetätigungseinrichtung 17 aus einem Bordwerkzeug 18, vorzugsweise einem Außensechskantschlüssel, sowie einer zugehörigen Werkzeugaufnahme 19, vorzugsweise Innensechskant, in der Rotorwelle 8. Die Werkzeugaufnahme 19 befindet sich hinter einer Montageöffnung 20 im Gehäuse 4, wobei die Montageöffnung 20 im Betrieb von einer nicht gezeigten Abdeckkappe verschlossen wird. Erst bei Entfernen der Abdeckkappe wird im Falle einer Hilfsbetätigung die Werkzeugaufnahme 19 für das Bordwerkzeug 18 freigegeben. Bei auf die Rotorwelle aufgesetztem Bordwerkzeug 18 wird durch Drehbewegung des Bordwerkzeuges 18 und damit Drehung der Rotorwelle 8 die Stellbewegung 16 in die Feststellbremse eingeleitet. Eine derartige Hilfsbetätigungseinrichtung 17 ist zwar sehr einfach und kostengünstig realisierbar, jedoch wenig komfortabel, da sie unmittelbar am Kraftfahrzeugrad erfolgen muß.

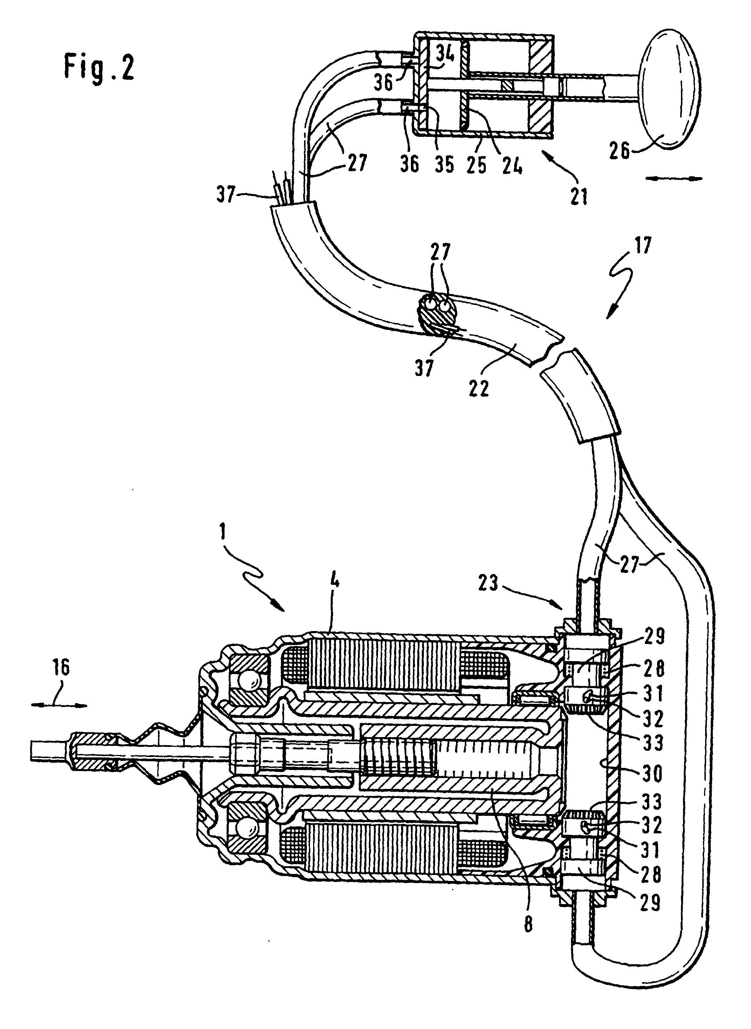

In Weiterentwicklung der Ausführung nach Fig. 1 ist in Fig. 2 eine Hilfsbetätigungseinrichtung 17 erkennbar, die durch Muskelkraft beispielsweise vom Fahrgastraum eines Kraftfahrzeuges aus bedienbar ist. Dabei erfolgt die Hilfsbetätigung ausgehend von der Muskelkraft des Bedieners durch pneumatische Kraftübertragung in einen Aktuator 1 mit analogem funktionellen Aufbau zu dem bereits beschriebenen und in Fig. 1 abgebildeten Aktuator. Die pneumatische Hilfsbetätigungseinrichtung 17 nach Fig. 2 besteht im wesentlichen aus einer pneumatischen Pumpeneinheit 21, einem kombinierten flexiblen Versorgungskabel 22 sowie einem in den Aktuator 1 integrierten pneumatisch-mechanischen Wandler 23. Die pneumatische Pumpeneinheit 21 ist aufgrund des kombinierten und flexiblen Versorgungskabels 22 je nach Platzbedarf beliebig innerhalb des Kraftfahrzeuges positionierbar, jedoch wird selbstverständlich eine Positionierung der Pumpeneinheit 21 für den Fahrer jederzeit erreichbar innerhalb des Fahrgastraumes angestrebt.

Die allgemeine Funktionsweise der elektromechanischen Regelbetätigung einer üblicherweise als Trommelbremse ausgeführten Feststellbremse erfolgt dabei analog zu dem bereits beschriebenen. Die Hilfsbetätigung der Feststellbremse wird ausgehend von der Pumpeneinheit 21 durch diskontinuierlichen Druckauf- bzw. -abbau bewerkstelligt. Dazu führt der muskelkraftbetätigte Pumpenkolben 24, der innerhalb des Pumpengehäuses 25 axial verschiebbar geführt ist, axiale Pumpbewegungen aus. Der pneumatische Druckaufbau kann vorzugsweise durch luftpumpenartige Hubbewegungen eines Handknaufes 26 innerhalb der Pumpeneinheit 21 erzeugt werden. Ausgehend von der Pumpeneinheit 21 wird der pneumatische Druck über zumindest einen Druckschlauch 27 in den pneumatisch-mechanischen Wandler 23 innerhalb des Aktuators 1 übertragen. Der pneumatisch-mechanische Wandler 23 umfaßt im wesentlichen einen mittels einer Feder 28 gegenüber dem Gehäuse 4 vorgespannten Kolben 29. Der Kolben 29 ist innerhalb einer Bohrung 30 des Gehäuses 4 drehbar und axial verschiebbar geführt. Bei Axialverschiebung des Kolbens 29 infolge Druckbeaufschlagung wird der Kolben 29 über eine Kulissenführung 31, in die sich ein kolbenfester Bolzen 32 erstreckt, entgegen der Federkraft der Druckfeder 28 bewegt und über die Kulissenführung 31 in eine Drehbewegung versetzt. Damit gerät der entgegen der Federkraft der Druckfeder axial verschobene Kolben 29 mit einer Kegelradverzahnung 33 in Eingriff mit einer entsprechenden Verzahnung an der Rotorwelle 8 und vermag somit diese in eine diskontinuierliche Drehbewegung zu versetzen. Die Drehbewegung der Rotorwelle 8 bewirkt schließlich in bekannter Weise die Stellbewegung 16 der Feststellbremse. Jeder Kolben 29 des pneumatisch-mechanischen Wandlers 23 kann in Abhängigkeit von der Kulissenführung 31 eine Stellbewegung 16 in lediglich einer einzigen Richtung induzieren. Zur Realisierung sowohl einer Zustellwie auch einer Lösebewegung ist ein pneumatisch-mechanischer Wandler 23 mit zwei Kolben 29 erforderlich, wobei jeder Kolben 29 eine zum anderen Kolben 29 gegenläufige Drehbewegung auf die Rotorwelle 8 zu übertragen vermag. Damit sind zwei getrennte Druckschläuche 27 zum Anschluß an jeweils einen Kolben 29 erforderlich. Die pneumatische Speisung der getrennten Druckschläuche für Lösen bzw. Zustellen der Feststellbremse muß innerhalb der pneumatischen Pumpeneinheit vor der Hilfsbetätigung eingestellt werden. Dazu ist in den Pumpenkolben 24 mit Handknauf 26 ein Bedienteller 34 integriert, der über zumindest eine Öffnung 35 verfügt. Der Bedienteller 34 befindet sich unmittelbar an den Ausgängen 36 für die Druckschläuche 27 und vermag diese druckdicht zu verschließen, es sei denn, die Öffnung 35 im Bedienteller 34 gerät in Überschneidung mit einem der Ausgänge 36. Der Bedienteller 34 ist drehfest mit dem Handknauf 26 verbunden und erlaubt durch Drehung des Handknaufes 26 die Wahl des Betriebsmodus (Zustellen, Lösen) für die Hilfsbetätigungseinrichtung 17. Je nach Stellung der Öffnung 35 kann somit entweder der Druckausgang 36 für Lösen bzw. für Zustellen der Feststellbremse eingestellt werden.

Idealerweise enthält das kombinierte und flexible Versorgungskabel 22 sowohl elektrische Versorgungsleitungen 37 für die elektromechanische Betätigung des Aktuators im Regelfall der elektromechanischen Feststellbremsbetätigung als auch Druckschläuche 27 für die pneumatische Versorgung der Hilfsbetätigungseinrichtung 17. Das sehr flexible kombinierte Versorgungskabel 22 ermöglicht eine einfache Kabelverlegung am Fahrzeug und erspart zusätzliche Kabelstränge für die Hilfsbetätigungseinrichtung.

Der Anschluß des kombinierten Versorgungskabels 22 an den Aktuator ist selbstverständlich nicht nur auf die in Fig. 2 dargestellte Ausführungsform begrenzt. Als vorteilhafte Variante erweist sich eine Umsetzung mit einem einzigen kombinierten Anschluß am Aktuator 1 in Verbindung mit einer Aufteilung in die elektrische bzw. die pneumatische Versorgung erst innerhalb des Aktuators 1. Darüber hinaus sind auch andere Arten von pneumatisch-mechanischen Wandlern 23 denkbar, die beispielsweise die diskontinuierliche pneumatische Anregung infolge der Pumpbewegungen an der Pumpeneinheit 21 in eine annähernd kontinuierliche Drehbewegung der Rotorwelle 8 umwandeln.

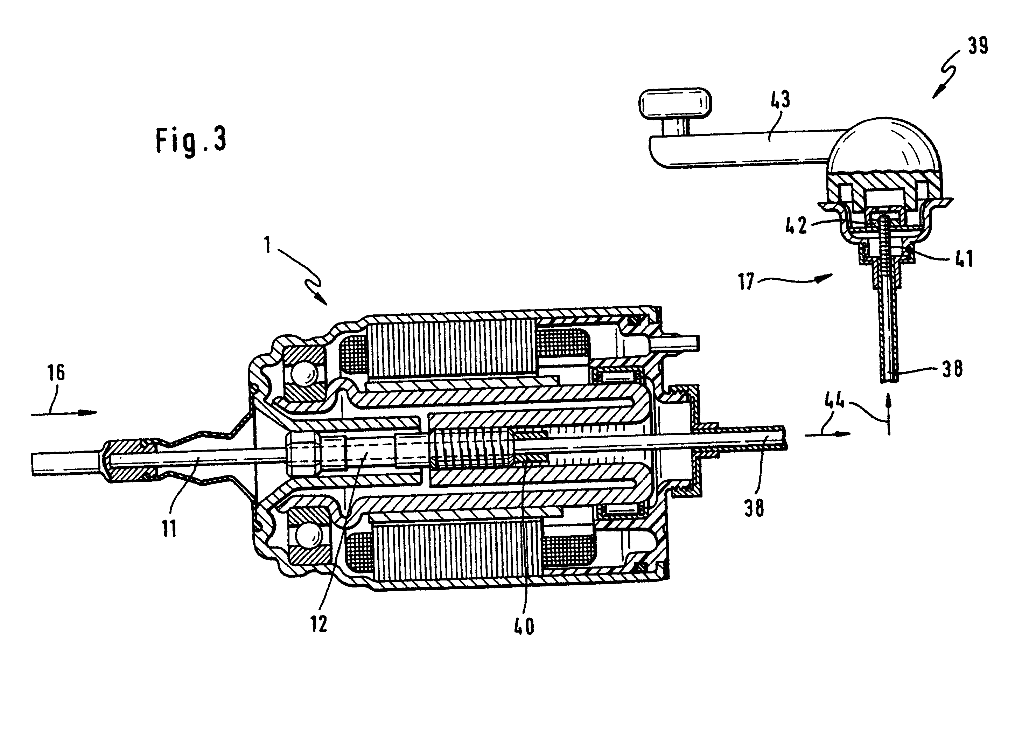

Fig. 3 ist ein Aktuator 1 mit einer Hilfsbetätigungseinrichtung 17 zu entnehmen, bei der die Betätigungskraft bei Hilfsbetätigung auf mechanischem Wege direkt auf die Feststellbremse übertragen wird. Dazu ist der mit dem bremsenfesten Stellglied in Verbindung stehende Seilzug als Zugstrang 38 ausgeführt, der durch eine durchgehende Öffnung im Aktuator 1 durch diesen hindurchgeführt ist und in ein vom Fahrer erreichbares Bedienelement 39 mündet. Auf dem Zugstrang 38 ist innerhalb des Aktuators 1 eine Mitnehmerhülse 40 verpreßt angeordnet, die aufgrund der Einbausituation des Zugstranges 38 unter Vorspannung am gewindeseitigen Ende der Spindel 12 anliegt. Die elektromechanische Betätigung der Feststellbremse im Regelfall ergibt sich damit analog zu dem bereits Beschriebenen und ermöglicht sowohl das Zustellen wie auch das Lösen der Feststellbremse.

Der Zugstrang 38 endet fahrerraumseitig in einen Gewindezapfen 41, der verdrehgesichert und axial verschiebbar innerhalb des Bedienelementes 39 angeordnet ist. Der Gewindezapfen 41 ist im Eingriff mit einer Mutter 42, die ihrerseits an einer Handkurbel 43 befestigt ist. Bei Hilfsbetätigung der Feststellbremse wird durch Drehung der Handkurbel und damit gleichzeitiger Drehung der Mutter 42 der Gewindezapfen mit Zugstrang in Zustellrichtung 44 der Feststellbremse bewegt. Diese Bewegung des Zugstranges 38 in Zustellrichtung 44 wird durch den Aktuator 1 hindurch unmittelbar auf das nicht gezeigte Stellglied der Feststellbremse übertragen, wobei der Zugstrang 38 besonders kostengünstig als Bowdenzug ausgeführt sein kann. Aufgrund der Beschaffenheit des Zugstranges, üblicherweise eines Bowdenzuges, erweist es sich bei einer Hilfsbetätigungseinrichtung 17 nach Fig. 3 als nachteilig, daß lediglich eine Hilfsbetätigung mittels des Bedienelementes 39 in Zustellrichtung 44 ermöglicht wird. Ein Lösen einer möglicherweise im Notfall zugestellten Feststellbremse ist mittels der dargestellten Hilfsbetätigungseinrichtung nach Fig. 3 nicht möglich. Es ist somit eine zusätzliche Notlöseeinrichtung, beispielsweise unter Verwendung von Bordmitteln, unmittelbar an der Feststellbremse erforderlich.

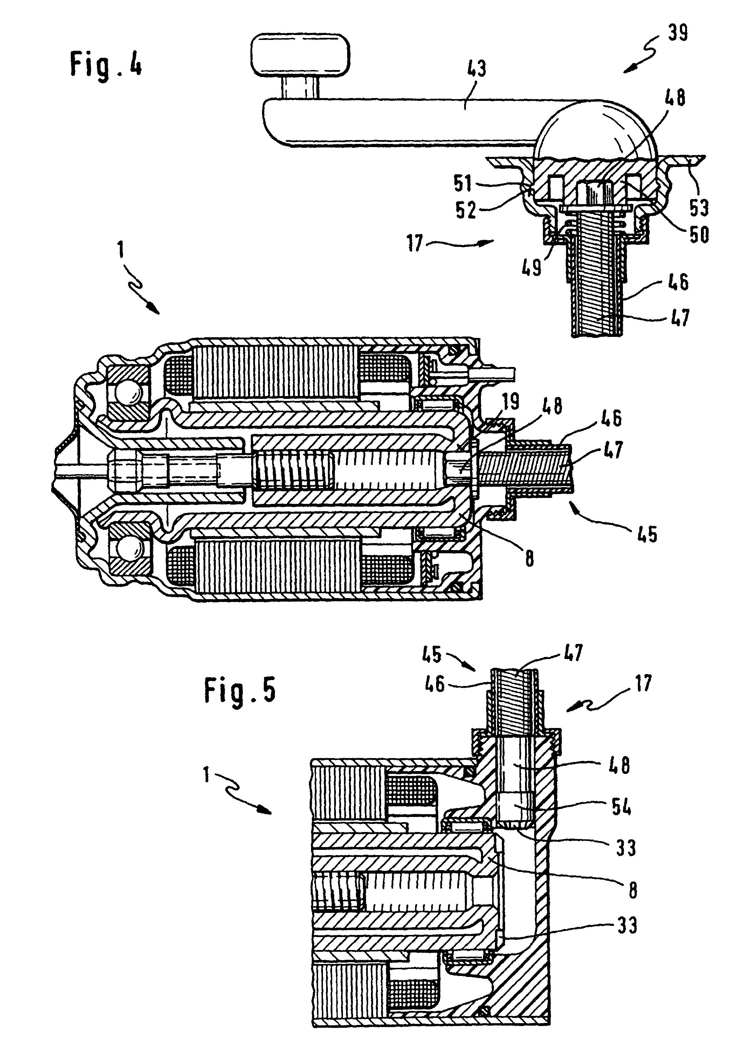

Den Fig. 4 und 5 sind weitere Ausführungsbeispiele für einen elektrisch betätigbaren Aktuator 1 mit Hilfsbetätigungseinrichtung 17 zu entnehmen, die sich gegenüber den bereits beschriebenen Varianten lediglich hinsichtlich der Betätigungskraftübertragung ausgehend vom Bedienelement 39 bis zum Aktuator 1 unterscheiden. Als Übertragungselement zwischen Bedienelement 39 und Aktuator 1 dient in beiden Hilfsbetätigungseinrichtungen 17 nach den Fig. 4 und 5 eine flexible Welle 45 mit einer gegenüber der Wellenummantelung 46 drehbaren Wellenseele 47. An beiden Enden besitzt die Wellenseele 47 Endstücke 48, die jeweils über ein zur Momentenübertragung geeigneten Querschnitt (z.B. Polygonquerschnitt, Außensechskant o. ä.) verfügen. Die Wellenseele 47 ist mittels einer Druckfeder 49 bei allgemeinen Betriebsbedingungen gegenüber der Wellenummantelung 46 axial vorgespannt, wodurch das aktuatorseitige Endstück 48 außer Eingriff mit der entsprechend gestalteten Werkzeugaufnahme 19 in der Rotorwelle 8 des Aktuators 1 befindet. Das Bedienelement 39, das üblicherweise in Erreichbarkeit des Fahrers innerhalb des Fahrgastraumes positioniert ist, kann aufgrund der flexiblen Gestaltung der Welle 45 auch an jeden anderen vorteilhaften Ort verlegt werden. Eine einfache Ausgestaltung des Bedienelementes 39 sieht eine Handkurbel 43 vor, die eine entsprechend der Kontur des Endstückes 48 geformte Aufnahme 50 aufweist. Dabei ist die Handkurbel 43 im üblichen Betriebszustand der Bremse entweder direkt auf das Endstück 48 aufgesetzt oder aber sie kann getrennt von der flexiblen Welle 45 aufbewahrt werden. Nur im Falle der Hilfsbetätigung wird die Handkurbel 43 dann auf das Endstück 48 aufgesetzt und durch axiales Niederdrücken entgegen der Kraft der Druckfeder 49 wird durch Axialverschiebung der Wellenseele 47 das aktuatorseitige Endstück 48 in Eingriff mit der rotorseitigen Werkzeugaufnahme 19 gebracht. Auf diesem Wege entsteht eine verdrehfeste Verbindung ausgehend von der Handkurbel bis zur Rotorwelle 8, die eine Drehmomentenübertragung erlaubt. Eine in diesem Zustand durchgeführte Drehung der Handkurbel 43 bewirkt gleichsam eine Drehung der Rotorwelle 8 und somit eine Stallbewegung (Lösen bzw. Zustellen) an der Feststellbremse am Kraftfahrzeugrad. Vorteilhafterweise besitzt die Handkurbel in der Nähe der Aufnahme 50 an ihrem Außenumfang einen Wulst 51, der bei axial niedergedrücktem Zustand der Handkurbel 43, d.h. bei Eingriff des aktuatorseitigen Endstückes 48 in der Werkzeugaufnahme 19 bei Hilfsbetätigung, in einer entsprechend gestalteten Nut 52 eines wellenfesten Aufnahmetopfes 53 einrastet. Ein solcher Aufnahmetopf 53 kann insbesondere aus Kunststoff bzw. als einfaches Blechumformteil gestaltet sein. Bei Beendigung der Hilfsbetätigung kann die Handkurbel 43 aus ihrer Rastung gelöst werden, wodurch die Wellenseele 47 aufgrund der Wirkungs der Federkraft wieder außer Eingriff mit der Rotorwelle gebracht wird.

Fig. 5 zeigt eine Weiterentwicklung der Hilfsbetätigungseinrichtung 17 aus Fig. 4, bei der eine radiale Anschlußmöglichkeit der flexiblen Welle 45 an den Aktuator 1 besteht. Die Gestaltung des Bedienelementes 39 kann dabei entsprechend dem in Fig. 4 Gezeigten ausgeführt sein. Auch in dieser Ausführung ist die Wellenseele 47 beispielsweise infolge der Krafteinwirkung einer Feder 49 gegenüber der Wellenummantelung 46 axial vorgespannt, wodurch die Wellenseele 47 im üblichen Betriebszustand der Bremse aktuatorseitig außer Eingriff mit der Rotorwelle 8 ist. Das aktuatorseitige Endstück 48 besteht hier aus einem Zapfen 54 mit Kegelradverzahnung 33. Eine zugehörige Kegelradverzahnung 33 ist an der Rotorwelle 8 ausgebildet. Bei Hilfsbetätigung, d.h. Axialverschiebung der Wellenseele 47, gerät der Zapfen 54 über die Kegelradverzahnung 33 in Eingriff mit der Rotorwelle und die gewünschte Drehbewegungsübertragung, ausgehend vom Bedienelement 39 auf die Rotorwelle 8, kann erfolgen.

Die dargestellten und erläuterten Ausführungsbeispiele von Hilfsbetätigungseinrichtungen 17 mit entsprechenden Aktuatoren 1 an der Feststellbremse sind selbstverständlich nicht auf Anwendungen bei Duo-Servo-Feststellbremsen beschränkt. Es ist ohne weiteres eine Übertragung des Erfindungsgedankens auf Trommelbremsen allgemein möglich. Darüber hinaus sind auch andere Aktuatortypen mit analoger Funktionsweise denkbar. Schließlich soll der erfinderische Gedanke auch nicht ausschließlich auf die innerhalb der Beispiele offenbarten Bedienelemente 39 und Kraftübertragungselemente 22,38,45 begrenzt sein.

### Bezugszeichenliste

- 1: Aktuator
- 2: Stator
- 3: Rotor
- 4: Gehäuse
- 5: Elektrische Wicklung
- 6: Elektrische Versorgungsleitung
- 7: Wälzlager
- 8: Rotorwelle
- 9: Permanentmagnet
- 10: Öffnung
- 11: Seilzug
- 12: Spindel
- 13: Verdrehsicherung
- 14: Außengewinde (Spindel)
- 15: Gewindebohrung (Rotorwelle)
- 16: Stellbewegung
- 17: Hilfsbetätigungseinrichtung
- 18: Bordwerkzeug
- 19: Werkzeugaufnahme
- 20: Montageöffnung
- 21: Pneumatische Pumpeneinheit
- 22: Kombiniertes Versorgungskabel
- 23: Pneumatisch-mechanischer Wandler
- 24: Pumpenkolben
- 25: Pumpengehäuse
- 26: Handknauf
- 27: Druckschlauch
- 28: Feder
- 29: Kolben
- 30: Bohrung
- 31: Kulissenführung
- 32: Bolzen
- 33: Kegelradverzahnung
- 34: Bedienteller
- 35: Öffnung
- 36: Ausgang
- 37: Elektrische Versorgungsleitung
- 38: Zugstrang
- 39: Bedienelement
- 40: Mitnehmerhülse
- 41: Gewindezapfen
- 42: Mutter
- 43: Handkurbel
- 44: Zustellrichtung
- 45: Flexible Welle
- 46: Wellenummantelung
- 47: Wellenseele
- 48: Endstück
- 49: Druckfeder
- 50: Aufnahme
- 51: Wulst
- 52: Nut
- 53: Aufnahmetopf
- 54: Zapfen

## Patentansprüche

1. Muskelkraftbedienbare Hiltsbetätigungseinrichtung (17) für eine im Regelfall elektromechanisch betätigte Feststellbremsanlage, die zumindest einen unmittelbar an der Feststellbremse am Rad angeordneten elektromotorischen Aktuator (1) besitzt, welcher einen Rotor (3) umfaßt und der direkt über ein Stellglied mit der Feststellbremse verbunden ist, **dadurch gekennzeichnet, daß** die Hilfsbetätigungseinrichtung (17) derart ausgebildet ist, daß sie ausschließlich bei Hilfsbetätigung mit dem Rotor (3) des elektromotorischen Aktuators bzw. dem Stellglied der Feststellbremse mechanisch gekoppelt ist.

2. Hilfsbetätigungseinrichtung (17) nach Anspruch 1, **dadurch gekennzeichnet, daß** die elektromechanisch betätigte Feststellbremse als Trommelbremse, vorzugsweise Duo-Servo-Trommelbremse ausgeführt ist.

3. Hilfsbetätigungseinrichtung (17) nach einem der vorherigen Ansprüche, **dadurch gekennzeichnet, daß** sie derart ausgebildet ist, daß der mechanische Zugriff der Hilfsbetätigungseinrichtung rotatorisch auf einen Rotor (3) des elektromotorischen Aktuators erfolgt.

4. Hilfsbetätigungseinrichtung nach einem der vorherigen Ansprüche, **dadurch gekennzeichnet, daß** der Rotor (3) des elektromotorische Aktuators (1) eine Aufnahme (19) für ein Bordwerkzeug (18) zur Hilfsbetätigung der Feststellbremse aufweist.

5. Hilfsbetätigungseinrichtung nach einem der Ansprüche 1 bis 3, **dadurch gekennzeichnet, daß** die Hilfsbetätigungseinrichtung (17) eine durch Muskelkraft betätigbare Bedieneinheit (39) sowie zumindest ein zur Übertragung der Betätigungskräfte zwischen Bedieneinheit (39) und elektromotorischem Aktuator (1) verlaufendes Übertragungselement (22,38,45) besitzt.

6. Hilfsbetätigungseinrichtung (17) nach Anspruch 5, **dadurch gekennzeichnet, daß** die Bedieneinheit (39) als pneumatische Pumpeneinheit (21) ausgeführt ist.

7. Hilfsbetätigungseinrichtung nach Anspruch 6, **dadurch gekennzeichnet, daß** das Übertragungselement (22) zumindest einen Druckschlauch (27) enthält.

8. Hilfsbetätigungseinrichtung (17) nach Anspruch 7, **dadurch gekennzeichnet, daß** das Übertragungselement (22) aktuatorseitig in einen pneumatisch-mechanischen Wandler (23) mündet, der die pneumatische Betätigungskraft in eine auf den Aktuator (1) bzw. die Feststellbremse wirkende Stellkraft umwandelt.

9. Hilfsbetätigungseinrichtung nach Anspruch 8, **dadurch gekennzeichnet, daß** der pneumatisch-mechanische Wandler (23) in den Aktuator (1) integriert ist, wobei der Wandler (23) zumindest einen pneumatisch betriebenen Kolben (29) besitzt, dessen translatorische Bewegung in eine rotatorische Stellbewegung umgesetzt wird.

10. Hilfsbetätigungseinrichtung nach Anspruch 9, **dadurch gekennzeichnet, daß** der pneumatisch-mechanische Wandler (23) zwei Kolben (29) enthält, wobei der erste Kolben (29) bei Zustellbetätigung der Hilfsbetätigungseinrichtung (17) eine rotatorische Zustellbewegung am Aktuator (1) bewirkt und der zweite Kolben (29) bei Lösebetätigung eine gegenläufige rotatorische Lösebewegung am Aktuator (1) veranlaßt.

11. Hilfsbetätigungseinrichtung nach einem der Ansprüche 8 bis 10, **dadurch gekennzeichnet, daß** die rotatorische Stellbewegung des Kolbens (29) über eine Kegelradverzahnung (33) in eine Drehbewegung des Rotors (3) übertragen wird.

12. Hilfsbetätigungseinrichtung nach einem der Ansprüche 5 bis 11, **dadurch gekennzeichnet, daß** das Übertragungselement als kombiniertes, flexibles Versorgungskabel (22) ausgebildet ist, daß sowohl eine elektrische Versorgungsleitung (37) für die elektromechanisch betätigte Feststellbremse als auch wenigstens einen Druckschlauch (27) für die Hilfsbetätigungseinrichtung (17) aufweist.

13. Hilfsbetätigungseinrichtung (17) nach einem der Ansprüche 1 oder 2, **dadurch gekennzeichnet, daß** die Hilfsbetätigungseinrichtung einen mechanischen Durchgriff durch den elektromotorischen Aktuator und damit einen direkten Zugriff auf das Stellglied der Feststellbremse aufweist.

14. Hilfsbetätigungseinrichtung (17) zumindest nach Anspruch 5 und 13, **dadurch gekennzeichnet, daß** das Übertragungselement einen flexiblen Zugstrang (38), vorzugsweise Seilzug, besitzt, der durch den elektromotorischen Aktuator (1) hindurchgeführt ist und unmittelbar am Stellglied der Feststellbremse befestigt ist.

15. Hilfsbetätigungseinrichtung nach Anspruch 5, **dadurch gekennzeichnet, daß** die Hilfsbetätigungseinrichtung eine Kurbel (43) als Bedieneinheit und eine flexible Welle (45) als Übertragungselement aufweist, wobei die Welle (45) eine axial verschiebbare Wellenseele (47) enthält.

16. Hilfsbetätigungseinrichtung (17) nach Anspruch 15, **dadurch gekennzeichnet, daß** die Wellenseele (47) an beiden Enden Endstücke (48) aufweist, wobei ein Endstück in eine entsprechend gestaltete verdrehsichere Aufnahme (50) der Kurbel (43) einführbar ist und das gegenüberliegende, aktuatorseitige Endstück (48) in die zugehörige Aufnahme (19) im Aktuator (1) einführbar ist.

## Claims

1. Manually operable auxiliary actuating device (17) for a parking brake system that is electromechanically actuated in a case of control, which comprises at least one electromotive actuator (1) that is arranged on the wheel directly at the parking brake, said actuator comprising a rotor (3) and being directly connected to the parking brake by way of a control element,
**characterized in that** the auxiliary actuating device (17) is so designed that it is mechanically coupled to the rotor (3) of the electromotive actuator or the control element of the parking brake exclusively in the event of auxiliary operation.

2. Auxiliary actuating device (17) as claimed in claim 1,
**characterized in that** the electromechanically actuated parking brake is designed as a drum brake, preferably a duo-servo drum brake.

3. Auxiliary actuating device (17) as claimed in any one of the preceding claims,
**characterized in that** said device is designed such that the mechanical effect of the auxiliary actuating device is applied in a rotatory manner to a rotor (3) of the electromotive actuator.

4. Auxiliary actuating device as claimed in any one of the preceding claims,
**characterized in that** the rotor (3) of the electromotive actuator (1) includes an accommodation (19) for a service tool (18) for the auxiliary actuation of the parking brake.

5. Auxiliary actuating device as claimed in any one of claims 1 to 3,
**characterized in that** the auxiliary actuating device (17) possesses a manually operable operating unit (39) as well as at least one transmission element (22, 38, 45) that extends between operating unit (39) and electromotive actuator (1) for the transmission of the actuating forces.

6. Auxiliary actuating device (17) as claimed in claim 5,
**characterized in that** the operating unit (39) is designed as a pneumatic pump unit (21).

7. Auxiliary actuating device as claimed in claim 6,
**characterized in that** the transmission element (22) comprises at least one pressure hose (27).

8. Auxiliary actuating device (17) as claimed in claim 7,
**characterized in that** the transmission element (22) on the actuator side ends into a pneumaticmechanical converter (23) converting the pneumatic actuating force into a controlling force that acts on the actuator (1) or the parking brake.

9. Auxiliary actuating device as claimed in claim 8,
**characterized in that** the pneumaticmechanical converter (23) is integrated in the actuator (1), and the converter (23) comprises at least one pneumatically operated piston (29) whose translational movement is converted into an adjusting rotatory movement.

10. Auxiliary actuating device as claimed in claim 9,
**characterized in that** the pneumaticmechanical converter (23) comprises two pistons (29), the first piston (29) causing a rotatory feeding movement at the actuator (1) upon application of the auxiliary actuating device (17) and the second piston (29) causing a reverse rotation of release at the actuator (1) upon release actuation.

11. Auxiliary actuating device as claimed in any one of claims 8 to 10,
**characterized in that** the adjusting rotatory movement of the piston (29) is converted into a rotation of the rotor (3) by way of a bevel gear tooth system (33).

12. Auxiliary actuating device as claimed in any one of claims 5 to 11,
**characterized in that** the transmission element is designed as a combined flexible supply cable (22) which includes an electric supply line (37) for the electromechanically actuated parking brake as well as at least one pressure hose (27) for the auxiliary actuating device (17).

13. Auxiliary actuating device (17) as claimed in any one of claims 1 or 2,
**characterized in that** the auxiliary actuating device has a mechanical throughgrip through the electromotive actuator and, hence, direct access to the control element of the parking brake.

14. Auxiliary actuating device (17) at least as claimed in claims 5 and 13,
**characterized in that** the transmission element includes a flexible traction rope (38), preferably a Bowden cable, which is passed through the electromotive actuator (1) and attached directly at the control element of the parking brake.

15. Auxiliary actuating device as claimed in claim 5,
**characterized in that** the auxiliary actuating device includes a crank (43) as an operating unit and a flexible shaft (45) as a transmission element, said shaft (45) comprising an axially displaceable shaft core (47).

16. Auxiliary actuating device (17) as claimed in claim 15,
**characterized in that** the shaft core (47) includes end pieces (48) at both ends, one end piece being adapted to be introduced into a correspondingly shaped, unrotatable accommodation (50) of the crank (43), while the opposite end piece (48) close to the actuator is adapted to be introduced into the associated accommodation (19) in the actuator (1).

## Revendications

1. Dispositif d'actionnement auxiliaire (17) commandable au moyen d'une force musculaire pour une installation de frein de stationnement actionnée en général par voie électromagnétique, qui comporte au moins un actionneur à moteur électrique (1) qui est disposé directement sur le frein de stationnement au niveau de la roue, comprend un rotor (3) et est relié directement au frein de stationnement par l'intermédiaire d'un organe de commande, **caractérisé en ce que** le dispositif d'actionnement auxiliaire (17) est agencé de telle sorte qu'il est couplé mécaniquement, exclusivement lors de l'actionnement auxiliaire, au rotor (3) de l'actionneur à moteur électrique ou à l'organe de commande du frein de stationnement.

2. Dispositif d'actionnement auxiliaire (17) selon la revendication 1, **caractérisé en ce que** le frein de stationnement actionné par voie électromécanique est agencé sous la forme d'un frein à tambour, de préférence d'un frein à tambour duo servo.

3. Dispositif d'actionnement auxiliaire (17) selon l'une des revendications précédentes, **caractérisé en ce qu'**il est agencé de telle sorte que l'accès mécanique du dispositif d'actionnement auxiliaire s'effectue par rotation sur un rotor (3) de l'actionneur à moteur électrique.

4. Dispositif d'actionnement auxiliaire selon l'une des revendications précédentes, **caractérisé en ce que** le rotor (3) de l'actionneur à moteur électrique (1) comporte un logement (19) pour un outil de bord (18) pour l'actionnement auxiliaire du frein de stationnement.

5. Dispositif d'actionnement auxiliaire selon l'une des revendications 1 à 3, **caractérisé en ce que** le dispositif d'actionnement auxiliaire (17) comporte une unité de commande (39) pouvant être actionnée par une force musculaire ainsi qu'au moins un élément de transmission (22, 38, 45) qui s'étend pour la transmission des forces d'actionnement entre une unité de commande (39) et l'actionneur à moteur électrique (1).

6. Dispositif d'actionnement auxiliaire (17) selon la revendication 5, **caractérisé en ce que** l'unité de commande (39) est agencée sous la forme d'une unité de pompe pneumatique (21).

7. Dispositif d'actionnement auxiliaire selon la revendication 6, **caractérisé en ce que** l'élément de transmission (22) contient au moins un tuyau résistant à la pression (27).

8. Dispositif d'actionnement auxiliaire (17) selon la revendication 7, **caractérisé en ce que** l'élément de transmission (22) débouche, côté actionneur, dans un convertisseur pneumatique-mécanique (23), qui convertit la force d'actionnement pneumatique en une force de réglage agissant sur l'actionneur (1) ou sur le frein de stationnement.

9. Dispositif d'actionnement auxiliaire selon la revendication 8, **caractérisé en ce que** le convertisseur pneumatique-mécanique (23) est intégré dans l'actionneur (1), le convertisseur (23) possédant au moins un piston (29) mû pneumatiquement, dont le mouvement de translation est converti en un mouvement de réglage rotatif.

10. Dispositif d'actionnement auxiliaire selon la revendication 9, **caractérisé en ce que** le convertisseur pneumatique-mécanique (23) contient deux pistons (29), le premier piston (29) réalisant un mouvement d'avance rotatif au niveau de l'actionneur (1) lors de l'actionnement d'avance du dispositif d'actionnement auxiliaire (17), et le second piston (29) déclenchant un mouvement de libération rotatif opposé, au niveau de l'actionneur (1), lors de l'actionnement de libération.

11. Dispositif d'actionnement auxiliaire (17) selon l'une des revendications 8 à 10, **caractérisé en ce que** le déplacement de réglage rotatif du piston (22) est converti en un mouvement de rotation du rotor (3) par l'intermédiaire d'une denture de pignon conique (33).

12. Dispositif d'actionnement auxiliaire (17) selon l'une des revendications 5 à 11, **caractérisé en ce que** l'élément de transmission est agencé sous la forme d'un câble d'alimentation souple combiné (22), qui comporte aussi bien une ligne d'alimentation électrique (37) pour le frein de stationnement actionné par voie électromécanique, qu'au moins un tuyau résistant à la pression (27) pour le dispositif d'actionnement auxiliaire (17).

13. Dispositif d'actionnement auxiliaire (17) selon l'une des revendications 1 ou 2, **caractérisé en ce que** le dispositif d'actionnement auxiliaire comporte un accès mécanique à travers l'actionneur à moteur électrique et par conséquent un accès direct à l'organe de commande du frein de stationnement.

14. Dispositif d'actionnement auxiliaire (17) selon au moins les revendications 5 et 13, **caractérisé en ce que** l'élément de transmission est un organe de traction flexible (38), de préférence un câble de traction, qui traverse l'actionneur à moteur électrique (1) et est fixé directement à l'organe de commande du frein de stationnement.

15. Dispositif d'actionnement auxiliaire selon la revendication 5, **caractérisé en ce que** le dispositif d'actionnement auxiliaire comporte une manivelle (43) en tant qu'unité de commande et un arbre flexible (45) en tant qu'élément de transmission, l'arbre (45) contenant une âme (47), déplaçable axialement.

16. Dispositif d'actionnement auxiliaire (17) selon la revendication 15, **caractérisé en ce que** l'âme (47) de l'arbre comporte des éléments d'extrémité (48) au niveau de ses deux extrémités, un élément d'extrémité pouvant être introduit dans un logement de forme correspondante (50), bloquée en rotation, de la manivelle (43) et que l'élément d'extrémité opposé (48), situé côté actionneur, peut être introduit dans le logement (19) situé dans l'actionneur (1).
